# EUROPEAN PATENT SPECIFICATION

(11) **EP 0 550 499 B1**
(45) Date of publication and mention of the grant of the patent: **07.12.1994**
(21) Application number: 91916318.8
(22) Date of filing: 10.09.1991
(51) Int. Cl.: F24D 11/00

(54) **IMPROVEMENTS RELATING TO CENTRAL BOILER SYSTEMS**
ZENTRALHEIZUNGSANLAGE
AMELIORATIONS APPORTEES AUX SYSTEMES DE CHAUDIERE CENTRALE

(30) Priority: 27.09.1990 GB 9021083; 22.11.1990 GB 9025448
(43) Date of publication of application: 14.07.1993
(73) Proprietor: GLEDHILL (WATER STORAGE) LIMITED, Blackpool FY4 3RL (GB)
(72) Inventor: HOUGHTON, A. Gledhill, Lytham, Lancs FY8 5PZ (GB)
(74) Representative: Denmark, James
(86) International application number: GB9101539
(87) International publication number: WO9206336

(56) References cited:
- EP-A- 168 084
- EP-A- 290 846
- DE-A- 3 123 875
- GB-A- 1 425 508

## Description

This invention relates to central boiler systems for the supply of heat to a plurality of individual "units", for example apartments in multistorey buildings, according to the first part of claim 1. These systems are disclosed in the EP-A-0 290 846 and GB-A-1 425 508.

The basis of a central boiler system is that there should be a single boiler or a group comprising two or more boilers located at a single location for example in the basement of a building, and the boiler or boilers serve to heat water and the heat in the water is used for supplying heat and/or hot water to individual units e.g. apartments in the building.

One of the difficulties with such a system relates to the installation of the system, to ensure that the individual units can be supplied with adequate heat and hot water, and the monitoring of the system to ensure that the individual units are running in a most economical fashion.

The present invention provides a central boiler system comprising at least one boiler in which water is heated, a main circulating system through which water heated by the boiler is circulated, and at least two unit heating systems connected in parallel to the main circulating system, and each comprising a storage.tank to which heat is supplied from the main circulating system on demand, and wherein temperature sensitive controls are utilized for the effective control, monitoring and/or installation, characterized in that the controls are arranged to provide that no water will be supplied to any storage tank unless the temperature of the water in the main circulating circuit is above a predetermined level.

Preferably, if the said temperature is too low, then the control will call for hotter water from a buffer store and the boiler(s) may also be fired if necessary.

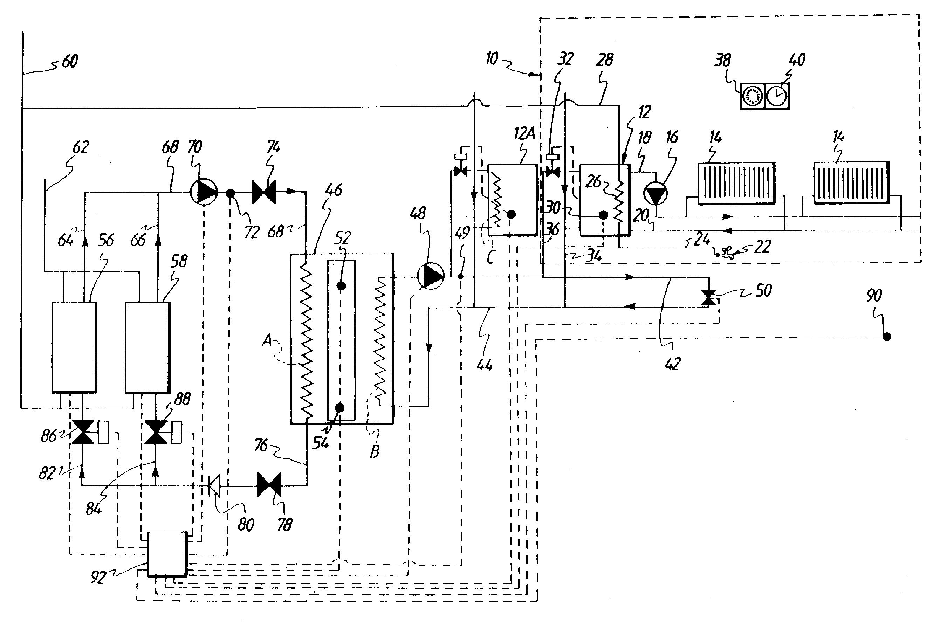

An embodiment of the present invention will now be described, by way of example, with reference to the accompanying drawings which the single figure shows a central boiler system with control means.

Referring to the drawing, which indicates the basic elements of the combined boiler system, the components indicated by reference (10) and contained in the dotted line rectangle (10) are the parts which will be provided in a "user unit" and more particularly an apartment in a multistorey building, or an office in a multi storey building, or the like. As can be seen from the rectangle (10), the unit contains a thermal store tank (12) containing the hot water for the unit (10), and connected to the thermal store tank (12) are heat emitters in the form of radiators (14) for the space heating of the unit (10). The radiators are supplied from the thermal store (12) by means of a circulating pump (16) and appropriate pipe work (18) (20). The water in the store (12) is circulated directly through the radiators (14), but indirect heating may be adopted if required. That is to say, the water which is circulated through the radiators (14) may be circulated through a heat exchanger coil inside the thermal store (12).

As regards the water consumption points, indicated for example by tap (22), in the unit (10) these are supplied with hot water from line (24) which is connected to a heat exchange coil (26) contained in the store (12), the heat exchange coil being supplied with cold water from the mains supply through line (28).

The thermal store embodies at least one thermostat (30) by which the maintenance of heat energy stored in the store (12) is controlled, and the thermostat is operationally connected to a motorised control valve (32) through which water to the store (12) is supplied from the central boiler plant. Colder water returning from the thermal store (12) to the central boiler heating system is returned through lines (34), and the supply line for supplying hot water to the thermal store (12) is indicated by reference (36). The water which is circulated via pipes (34) and (36) to heat the thermal store may be circulated through a heat exchanger coil inside the termal store (12).

The unit (10) is self-contained insofar as the heat demands from the thermal store will be dictated by the requirements of the unit (10). For example if more space heating is required, the supply of hot water to the radiators (14) will be maintained, and this may be under the control of a thermostat (38) contained in unit (10) and/or by means of a timer control clock (40). Controls (38) and (40) are set to control the operation of the pump (16) so that when there is a heat demand, pump (16) will be operational, and when there is no heat demand pump (16) will be switched off.

When there is demand for hot water such as at outlet (22), it is simply a matter of opening the appropriate outlet and heat will be extracted from the thermal store by heat exchange through coil (26).

As can be appreciated, as regards unit (10), which if an apartment in a multi storey block, the demands for heat for space heating and/or for hot water will vary depending upon the time of day. In the morning for example there will be a demand for space heating and for hot water, certainly during the winter periods, and there will be a demand for hot water all year round. The demand is likely to lessen during the day, but will increase in the early evening and again there will be high demand, certainly for hot water, in the late evening. During the night the demand will be minimal.

With these fluctuations in demand, monitoring and control of the thermal store must be effected in order to ensure that there is sufficient heat to meet the demands, and the present invention in providing a central boiler heating system is arranged to meet these requirements.

The figure also shows a further thermal store tank (12A) which is identical to tank (12), but is located along with the other ancillary parts described above in another unit similar to unit (10). The building may have any number of units or apartments (10), and the centralised heating system for these apartments will be required to have the appropriate output and control.

Reverting again to unit (10), it will be seen that lines (34) and (36) couple with a main storage circuit, by being connected in parallel thereto with the other units such as (12a), said main storage circuit comprising a circulating circuit indicated by lines (42) and (44) which are coupled to a buffer storage tank (46) for containing a quantity in buffer storage of hot water. The circulation circuit (42), (44) is provided with a system pump (48), a temperature sensor (49) in line (42) and a by-pass valve (50). If the system pump (48) is running and circulating water through lines (42) and (44), the water will be returned to the buffer store and the by-pass valve (50) will be opened as long as there is no demand from any thermal store such as (12), (12a) and so on. If there is demand from a unit 10, then the hot water being delivered by the system pump (48) is directed to the appropriate thermal store through the appropriate line (36), as long as sensor (49) indicates that the water in the main circulating circuit is above a preset value. The cold water from the store is returned via line (34). There may be more than one sensor (49) in the storage circuit. For example, there may be one for each unit (10).

A problem which is encountered with central boiler systems of the type illustrated in the accompanying drawing is that it is difficult to provide for effective monitoring of the heat utilised by each of the units such as unit (10). One method is to use a heat meter which senses the temperature of the water supply to each unit or its thermal storage tank, the temperature of the water returning from the storage tank, and to relate this temperature difference with the volume of water supplied in order to calculate the total heat supplied. Heat meters can be inaccurate, but more particularly they are expensive, and the advantageous feature of the arrangement described is that if upon demand of a thermostat (30) of a storage tank (12) there is a demand for heat to be supplied to the tank from the main circulating circuit, the temperature of the water in the circulating circuit is sensed by thermostat (49), and if the water in the circulating circuit is not up to a preset level, then supply of heat to the tank (12) by the supply of hot water will not be effected. This means that the consumer will not be charged for the supply of water which is not at a sufficiently high temperature to meat the demand. By controlling in this way means that the temperature factor in calculating the heat supplied to each unit can be eliminated from the calculation, and the calculation can be based entirely upon the volume of water supplied. This means that a simple flow meter can be used for the calculation of the supply of heat to each unit. Said flow meters are used at a fraction of the cost of heat meters and generally speaking are more reliable. Thus, the system controller will endeavour to maintain the water circulating in the main circulation circuit (42, 44) within a predetermined temperature band range for the effective elimination of the temperature from the calculation in computing the amount of heat or hot water supplied to each unit (10). Each consumer therefore should be charged accurately only for the heat supplied to his unit.

In other cases of central boiler systems, installers simply arrange for the cost of the fuel consumed by the boiler to be divided equally among the units (10). This clearly is inequitable, and it is felt that this arrangement will be unsatisfactory in the future. The present arrangement provides for the simple and effective monitoring and measuring of the heat supply to each unit, at the minimum of cost.

The buffer store tank (46) is thermostatically controlled by means of the thermostats (52) and (54), and it should be mentioned that although one buffer store tank (46) only is shown, the system may be provided with two or more depending upon requirements of such buffer store tanks.

Typically, the buffer store tanks may be located in the basement of the building containing the units (10), and it will be understood from the description given that the buffer storage tanks supply hot water for all of the units (10).

The primary heat suppliers for the system are boilers such as boilers (56) and (58), which may typically also be located in the basement of the building and adjacent to the buffer storage tank or tanks. The drawing shows two boilers (56) and (58), but it should be mentioned that the system depending upon the number of units (10) and the size of such units may comprise only a single boiler or they may be three or more boilers.

The static head in the whole system is maintained by the cold feed tank which is connected to the boiler via the cold feed (60), from which lines (28) are branched, and the boilers have an open vent line (62) as shown. Water heated in the boilers (56) and (58) is injected into the system through output lines (64) (66) into a common line (68) which contains a boiler pump (70). The line also has a thermostat (72) and a regulating/isolating valve (74). Line (68) delivers hot water to the buffer store, and the cooler water returning from the buffer store (or stores) is returned via line (76) which also contains a regulating/isolating valve (78). Line (76) also has a non-return valve (80) (which is optional) and finally the cooler water returning in line (76) is returned through lines (82),(84) to the boilers (56) and (58) the said lines (82) and (84) including motorised control valves (86) and (88).

The system furthermore includes an outside sensor (90), the purpose of which is to prevent the system from shutting down completely and automatically when the temperature outside of the building is below a preset minimum, such as might happen for example during the night when there is minimum or zero demand on any part of the system.

The operation of the system is under the control of a system controller (92), and the control links with the various parts of the system and the system controller (92) are indicated in dotted lines. Thus, the firing of boilers (56) and (58) is under the control of the control system as are the motorized valves (86) and (88) for the boilers so that when there is no demand of a boiler it can be shut down by closing the gas valve and can be isolated from the circuit by closing its motorized valve.

The output of the boilers is under the control of the boiler pump (70) and the thermostat (72) which pump and thermostat are coupled to controller (92). The thermostat (72) constantly monitors the output temperature of the boiler units and can, arrange for an increase or decrease of the output by causing the controller to effect control on the boiler pump (70), the boilers (56) and (58) and/or their motorized isolation valves (86) and (88).

As regards the circulation circuit including the buffer store or stores, the controller (92) is connected to the thermostats (52) and (54) of each buffer store, to temperature sensitive device(s) (49), to the system pump (48), and to the by-pass valve (52).

The thermostat (52) indicates when the buffer store is satisfied or fully charged in which case the supply of heat from the boiler circuit may be controlled reduced or terminated, whilst the thermostat (54) indicates when the buffer store is depleted and requires to be charged with hot water from the boiler circuit.

The system pump (48) is controlled so as to circulate the hot water from the store (46) when there is a demand from a unit (10) or if there is no demand to circulate the water through the by-pass valve (50). Temperature sensitive device(s) (49) as explained herein dictates whether hot water may be supplied from the buffer store circuit to the units (10).

Finally, the controller (92) is connected to each thermostat (30) in each thermal store (12), (12a) and so on so that the temperature of each thermal store can be monitored and the associated motorised valve (32) can be operated. For example if any thermal store indicates a demand, the signal is fed back to the central controller (92) which in turn ensures that the system pump (48) is operated and the motorised valve (32) is opened so that hot water from the buffer store (46) will be supplied to the appropriate store (12) which has indicated the demand, provided the circulating circuit is up to temperature.

The overall system provides for the effective control and monitoring of the entire central boiler system. By adopting the arrangment illustrated, the installation can be effectively commissioned i.e. installed so as to run efficiently and reliably, and it can also be continuously monitored and controlled, and these features represent a considerable step forward in the art, because in other installations where individual heating systems are installed in units such as unit (10), the installation, monitoring and control are difficult and time consuming especially if the engineer has repeatedly to visit different units in different levels of the building.

When the apparatus described is used for monitoring, the system controller (92) provides centralised monitoring and it can be used at the commissioning and fault finding stage, and also at the servicing stage. If a thermostat (32) drifts in use resulting in the associated motorised valve staying open when it should be closed, this could also lead to the consumer paying for heat on a continuous basis. The central control system described can prevent this as continuous monitoring of the setting of the thermostat can be effected and the control unit (92) monitoring may be effective by having low voltage wiring connected via a relay to each thermal store, whereby the open or closed state of each thermostat (32) can be monitored from the central location. Additionally, the system can be arranged to monitor the temperature at which the thermostat operates, and this could be achieved by the addition of a thermocouple located in the thermostat pocket. In an alternative arrangement it is possible to use only a thermostor to monitor temperature and to operate the motorised valve via a relay (or low voltage motorised valves may be used).
When the system is monitored and controlled, the central controller (92) requires to be computer programmed. A main objective of the monitoring and control is to provide for economy of utilisation to be achieved by logical control of the temperatures which are under surveilance throughout the system. As a further refinement in order to ensure accurate proportion of costs to the respective units (10) depending upon the heat consumed, it can be arranged that the flow temperatures into the respective thermal stores such as (12), (12a) are virtually equal.

In monitoring and control, the controller (92) will be programmed constantly to monitor the data received from all temperature sensors and will then be set to control the boiler burners, the boiler valves (86) (88), the boiler pump (70), the system pump (48), the thermal store inlet valves (32) and the by-pass valve (50) as explained herein. The controller may be set to sense the rate of heat or energy depletion of all of the thermal stores, and the state of the buffer stores, and the controller will then decide on how many (if any) of the boilers will fire, and will also ensure that no unnecessary cycling or firing of the boiler or boilers takes place. In the event that the demand is particularly high, the controller will automatically or by early warning ensure that all boilers are firing to prevent depletion of the buffer store temperatures, but when any boiler is not firing, the controller will close off the associated inlet valve.

Above all as explained herein a control exercised by the controller by the use for example of device(s) (49), will be that no thermal store inlet valve (32) will be open until it is ensured that the inlet temperature is at a predetermined limit.

As regards the system pump this will be controlled both as to its on or off condition and its speed according to total demand. The by-pass valve (50) will also be controlled according to total demand but generally speaking the by-pass valve (50) will be open particularly when demand is low.

A timer embodied in or connected to the controller can arrange to shut down the entire system completely during periods when there will be no demand, for example during the night, always providing that the outside temperature is not below a nominated limit.

The controller can be inputted so as to reduce the thermostatic control or charge temperature of each of the thermal stores (12), (12a) and indeed of the buffer store or stores for example during periods of warm weather, and this may be controlled automatically by virtue of sensing of the outside temperature by the outside sensor. The temperatures can be adjusted automatically or over a period, for example 24 hour period, which will increase the overall efficiency of the system considerably.

The temperature sensitive devices used throughout will preferably be temperature sensitive to provide a change in electrical signal, as opposed to mechanical signal even in cases where components are described as thermostats, as the entire system preferably is under electronic control, which requires electrical signalling.

By using the controller as described above, the need for separate optimisers or sequential controllers is avoided although these items can be provided should they be required by the users.

In a modified arrangement, the boiler circuit, circulating circuit and unit supply circuit may be pressurised. In such case, heat exchange coils A, B and C (shown in doted lines) would be required, together with an expansion vessel and pumping setin lieu of the feed and expansion tank. The buffer store(s) and thermal stores would each be fitted with their own feed and expansion tanks.

The controller, inter alia, as can be seen from the above provides for adjustment of all thermostat temperature settings depending on season, and can also be adjusted depending upon maximum boiler temperature which is esspecially useful when commissioning any installation. The controller can also adjust the top and bottom temperatures on each buffer store as well as to adjust the temperature of each thermal store (12), (12a), but for best performance of these arrangements the thermostat should be electrical in nature.

Finally, the system may be provided with an audible alarm to indicate a malfunction.

It is not necessary that the boiler and buffer stores be located in the same building, nor is it necessary that the boilers should supply only a single building. Boilers may be located for example in a plant room whilst the buffer stores respectively are located in different buildings. Where the building is particularly tall, the buffer store system can be split vertically by using intermediate buffer stores and header tanks at intermediate heights of the building.

In some cases it may be necessary to operate the system without buffer stores, but this is expected to lead to a lowering of system efficiency.

As regards the thermal stores (12), (12a) these may be constructed as set forth in or embody any feature disclosed in our existing patents and patent applications as follows 2153503 2153504 2174483 2182759 2200978 2206954 2221750 2228069 2230621 and 2013643.3 which are patents and applications in the United Kingdom.

The control system preferably has appropriate displays to give indications of the state of various aspects of the system but not limited to current temperatures, state of bypass current, which boilers are calling for heat and which zone valves are open, the buffer store temperatures, fault warnings, and the state of pumps, boiler(s) and boiler valves.

## Claims

1. A central boiler system comprising at least one boiler in which water is heated, a main circulating system through which water heated by the boiler is circulated, and at least two unit heating systems connected in parallel to the main circulating system, and each comprising a storage tank to which heat is supplied from the main circulating system on demand, and wherein temperature sensitive controls are utilized for the effective control, monitoring and/or installation, characterized in that the controls are arranged to provide that no water will be supplied to any storage tank unless the temperature of the water in the main circulating circuit is above a predetermined level.

2. A system according to claim 1, wherein the main circulating circuit comprises a by-pass line with a by-pass valve controlled according to total demands which is normally open to allow circulation of the water.

3. A system according to Claim 2 wherein the control opens the by-pass valve only in times of little or no demand.

4. A central boiler system according to Claim 1, 2 or 3, including at least one buffer store for the retention of a store of hot water, said buffer store being connected in the boiler circuit so as to receive hot water therefrom and to return cooler water thereto, and the main circulating circuit is supplied from the buffer store circuit.

5. A system according to Claim 4, wherein the boiler and buffer store are connected by a boiler circuit, containing a boiler pump for circulating water from the boiler in the buffer store and back to the boiler.

6. A system according to claim 5, wherein the boiler circuit includes a thermostat controlling the boiler pump.

7. A system according to claim 5 or 6, wherein the boiler circuit includes at least one regulating/isolating valve.

8. A system according to claim 5, 6 or 7, wherein the return line to the boiler in the boiler circuit includes a motorized control valve.

9. A system according to any of claims 4 - 6, wherein each of said heating systems comprises a thermal storage arrangement comprising a hot water storage tank, a space heating closed circuit which receives heat from the water in the storage tank, and a domestic hot water circuit including a heat exchange coil through which cold mains water passes and which receives heat from the hot water in the storage tank, the water in the storage tank being heated from the buffer store.

10. A system according to claim 9, wherein each thermal store arrangement embodies at least one thermostat by which the heat energy stored in the tank is sensed.

11. A system according to claim 10, wherein the thermostat has a motorized control valve through which water to the store is supplied from the main ciruclating circuit.

12. A system according to any preceding claim including an outside temperature sensor to prevent the system from shutting down automatically when the outside temperature is below a pre-set minimum.

13. A system according to any one of the preceding claims including an electronic system controller connected to the units to control the output of the boiler and/or buffer store dependant upon the demand from said units.

14. A system according to claim 13, when dependent on claim 8, wherein the system controller is connected to boiler and the motorised valve in the boiler return of the boiler circuit so that when there is no demand on the boiler, it can be isolated by controlling the valve and shut down by controlling its firing.

15. A system according to claim 13 or 14, when dependent on claim 5 or 6 or 7 wherein the system controller is connected to the boiler pump and/or the thermostat of the boiler circuit so as to control the boiler output by means of the boiler pump.

16. A system according to claim 13, 14 or 15, when dependent on claim 4, wherein the buffer store has a thermostat to control the circulating pump, and said thermostat is connected to the system controller.

17. A system according to claim 16, when dependent on claim 2, wherein the controller is connected to the by-pass valve for the control of same.

18. A system according to claim 17, wherein the system controller controls the circulating pump of the main circulating circuit so as to circulate hot water around the main circulating circuit and to the units if there is a demand, but otherwise to open the by-pass valve to allow the water from the buffer store to be circulated around the main circulating circuit.

19. A system according to any one of claims 13 to 18 when dependent on claim 10 and/or claim 11 wherein the controller is connected to the thermostat and/or the motorized valve of each unit so that the controller monitors the temperature of each thermal storage tank and/or operates the motorized valve dependent upon demand.

20. A system according to claim 19, wherein the controller is set to monitor the temperature at which each unit thermostat operates.

21. A system according to claim 20, wherein each unit thermostat embodies a thermo-couple.

22. A system according to any of claims 13 to 21, wherein the system controller can be computer programmed to monitor the operation of the system.

23. A system according to any of claims 13 to 22 wherein the system controller monitors the supply of water to the units so that water is supplied to the units at the same temperature.

24. A system according to any of claims 13 to 24, wherein there is a time control arranged to shut down the system during periods when there is no demand.

25. A system according to any preceding claim including an alarm device which operates upon a malfunction of the system.

## Patentansprüche

1. Zentralheizungsanlage mit wenigstens einem Kessel, in welchem Wasser erhitzt wird, einem Hauptzirkulationskreis, durch welchen das vom Kessel erhitzte Wasser zirkuliert wird, und mit wenigstens zwei Heizkörperkreisen, die parallel an den Hauptzirkulationskreis angeschlossen sind und jeweils einen Speicherbehälter aufweisen, dem Wasser von dem Hauptzirkulationskreis bei Bedarf zugeführt wird, wobei temperaturempfindliche Steuerungseinrichtungen für eine wirksame Steuerung, Überwachung und Betriebsweise verwendet werden, **dadurch gekennzeichnet,** daß mittels der Anordnung der Steuerungseinrichtungen dafür gesorgt wird, daß solange kein Wasser einem Speicherbehälter zugeführt wird, bis die Temperatur des Wassers in dem Hauptzirkulationskreis oberhalb eines vorbestimmten Wertes liegt.

2. Zentralheizungsanlage nach Anspruch 1, **dadurch gekennzeichnet,** daß der Hauptzirkulationskreis eine Nehenschlußleitung mit einem Bypassventil aufweist, welches in Abhängigkeit von dem Gesamtbedarf gesteuert wird und normalerweise offen ist, um eine Wasserzirkulation zu gestatten.

3. Zentralheizungsanlage nach Anspruch 2, **dadurch gekennzeichnet,** daß die Steuerung das Bypassventil nur zu Zeiten geringen oder fehlenden Bedarfs öffnet.

4. Zentralheizungsanlage nach einem der Ansprüche 1, 2 oder 3, mit wenigstens einem Pufferspeicher für die Zurückhaltung eines Heißwasservorrats, wobei der Pufferspeicher in dem Kesselkreis so angeordnet ist, daß er von diesem Heißwasser zugeführt erhält und an denselben kühleres Wasser zurückführt, und wobei der Hauptzirkulationskreis von dem Pufferspeicherkreis versorgt wird.

5. Zentralheizungsanlage nach Anspruch 4, **dadurch gekennzeichnet,** daß der Kessel und der Pufferspeicher über einen Kesselkreis miteinander verbunden sind, welcher eine Kesselpumpe zum Zirkulieren von Wasser von dem Kessel in den Pufferspeicher und zurück zum Kessel aufweist.

6. Zentralheizungsanlage nach Anspruch 5, **dadurch gekennzeichnet,** daß der Kesselkreis einen Thermostat aufweist, welcher die Kesselpumpe steuert.

7. Zentralheizungsanlage nach Anspruch 5 oder 6, **dadurch gekennzeichnet,** daß der Kesselkreis wenigstens ein Regel-/Absperrventil aufweist.

8. Zentralheizungsanlage nach Anspruch 5, 6 oder 7, **dadurch gekennzeichnet,** daß die Rücklaufleitung zum Kessel in dem Kesselkreis ein motorisches Steuerventil aufweist.

9. Zentralheizungsanlage nach einem der Ansprüche 4 bis 6, **dadurch** **gekennzeichnet,** daß jeder Heizkreis folgende Merkmale aufweist:
- eine Wärmespeichereinrichtung mit einem Heißwasser-Speicherbehälter,
- einen geschlossen Raumheizungskreis, dem Wärme vom Wasser im Speicherbehälter zugeführt wird, und
- einen Haushalts-Heißwasserkreis mit einer Wärmetauscherschlange, durch welches Kaltwasser hindurchtritt und welcher Wärme von dem Heißwasser in dem Speicherbehälter zugeführt wird, wobei das Wasser in dem Speicherbehälter von dem Pufferspeicher erwärmt wird.

10. Zentralheizungsanlage nach Anspruch 9, **dadurch gekennzeichnet,** daß jede Wärmespeichereinrichtung wenigstens einen Thermostat aufweist, mittels welchem die in dem Behälter gespeicherte Wärmeenergie erfaßt wird.

11. Zentralheizungsanlage nach Anspruch 10, **dadurch gekennzeichnet,** daß der Thermostat ein motorisches Steuerventil aufweist, durch welches Wasser von dem Hauptzirkulationskreis dem Speicher zugeführt wird.

12. Zentralheizungsanlage nach einem der vorhergehenden Ansprüche, mit einem Außentemperaturfühler, um eine automatische Abschaltung der Zentralheizungsanlage zu verhindern, wenn die Außentemperatur unterhalb eines vorgegebenen Minimalwertes liegt.

13. Zentralheizungsanlage nach einem der vorhergehenden Ansprüche, mit einer elektronischen Anlagensteuerung, welche an die Heizkörper angeschlossen ist, um die Ausgangsleistung des Kessels und/oder des Pufferspeichers in Abhängigkeit vom Bedarf der Heizkörper zu steuern.

14. Zentralheizungsanlage nach Anspruch 13 im Falle von dessen Abhängigkeit von Anspruch 8, **dadurch gekennzeichnet,** daß die Anlagensteuerung mit dem Kessel und dem motorischen Ventil in dem Kesselrücklauf des Kesselkreises verbunden ist, so daß dann, wenn am Kessel kein Bedarf vorhanden ist, der Kessel durch Steuerung des Ventils abgesperrt und durch Steuerung seiner Feuerung abgeschaltet werden kann.

15. Zentralheizungsanlage nach Anspruch 13 oder 14 im Falle von deren Abhängigkeit von Anspruch 5 oder 6 oder 7, **dadurch gekennzeichnet,** daß die Anlagensteuerung mit der Kesselpumpe und/oder dem Thermostat des Kesselkreises verbunden ist, um die Ausgangsleistung des Kessels mittels der Kesselpumpe zu steuern.

16. Zentralheizungsanlage nach Anspruch 13, 14 oder is im Falle von deren Abhängigkeit von Anspruch 4, **dadurch gekennzeichnet,** daß der Pufferspeicher einen Thermostat aufweist, um die Zirkulationspumpe zu steuern, wobei dieser Thermostat mit der Anlagensteuerung verbunden ist.

17. Zentralheizungsanlage nach Anspruch 16 im Falle von dessen Abhängigkeit von Anspruch 2, **dadurch gekennzeichnet,** daß die Anlagensteuerung mit dem Bypassventil verbunden ist, um dieses zu steuern.

18. Zentralheizungsanlage nach Anspruch 17, **dadurch gekennzeichnet,** daß die Anlagensteuerung die Zirkulationspumpe des Hauptzirkulaionskreises derart steuert, daß Heißwasser innerhalb des Hauptzirkulationskreises zirkuliert und zu den Heizkörpern gelangt, wo Bedarf besteht, jedoch ansonsten das Bypaßventil öffnet, damit Wasser aus dem Pufferspeicher innerhalb des Hauptzirkulationskreises zirkuliert wird.

19. Zentralheizungsanlage nach einem der Ansprüche 13 bis 18 im Falle von deren Abhängigkeit von Anspruch 10 und/oder 11, **dadurch gekennzeichnet,** daß die Anlagensteuerung mit dem Thermostat und/oder dem motorischen Ventil jedes Heizkörpers verbunden ist, so daß die Anlagensteuerung die Temperatur jedes Wärmespeicherbehälters überwacht und/oder das motorische Ventil bei Bedarf öffnet.

20. Zentralheizungsanlage nach Anspruch 19, **dadurch gekennzeichnet,** daß die Anlagensteuerung so eingestellt wird, daß sie die Temperatur überwacht, bei welcher jeder Heizkörperthermostat arbeitet.

21. Zentralheizungsanlage nach Anspruch 20, **dadurch gekennzeichnet,** daß jeder Heizkörperthermostat ein Thermoelement enthält.

22. Zentralheizungsanlage nach einem der Ansprüche 13 bis 21, **dadurch gekennzeichnet,** daß die Anlagensteuerung rechnerprogrammierbar ist, um den Betrieb der Anlage zu überwachen.

23. Zentralheizungsanlage nach einem der Ansprüche 13 bis 22, **dadurch gekennzeichnet,** daß die Anlagensteuerung die Zufuhr von Wasser zu den Heizkörpern überwacht, so daß Wasser den Heizkörpern mit derselben Temperatur zugeführt wird.

24. Zentralheizungsanlage nach einem der Ansprüche 13 bis 23, **dadurch gekennzeichnet,** daß eine Zeitsteuerung angeordnet ist, um die Anlage während der Perioden, in denen kein Bedarf vorhanden ist, abzuschalten.

25. Zentralheizungsanlage nach einem der vorhergehenden Ansprüche, mit einer Alarmvorrichtung, welche bei einer Fehlfunktion der Anlage arbeitet.

## Revendications

1. Système à chaudière centrale comprenant au moins une chaudière dans laquelle on chauffe de l'eau, un système principal de circulation dans lequel on fait circuler de l'eau chauffée par la chaudière, et au moins deux systèmes de chauffage d'unité reliés en parallèle au système principal de circulation, chacun comprenant un réservoir de stockage qui est alimenté sur demande par de la chaleur provenant du système principal de circulation, et dans lequel on utilise des commandes sensibles à la température pour la commande effective, le contrôle et/ou l'installation, caractérisé en ce que les commandes sont prévues pour qu'aucune eau ne soit envoyée à un réservoir quelconque de stockage à moins que la température de l'eau dans le circuit principal de circulation soit au-dessus d'un niveau prédéterminé.

2. Système suivant la revendication 1, dans lequel le circuit principal de circulation comprend une ligne de by-pass avec une vanne de by-pass commandée suivant les demandes totales et qui est normalement ouverte pour laisser passer la circulation de l'eau.

3. Système suivant la revendication 2, dans lequel la commande n'ouvre la vanne de by-pass qu'aux moments de demande faible ou d'aucune demande.

4. Système central de chaudière suivant la revendication 1, 2 ou 3, comprenant au moins un magasin tampon pour retenir une réserve d'eau chaude, ledit magasin tampon étant monté dans le circuit de chaudière de manière à en recevoir de l'eau chaude et à lui renvoyer de l'eau froide, et le circuit principal de circulation étant alimenté à partir du circuit de magasin tampon.

5. Système suivant la revendication 4, dans lequel la chaudière et le magasin tampon sont reliés par un circuit de chaudière comportant une pompe de chaudière pour faire circuler de l'eau de la chaudière dans le magasin tampon et la renvoyer à la chaudière.

6. Système suivant la revendication 5, dans lequel le circuit de chaudière comprend un thermostat commandant la pompe de chaudière.

7. Système suivant la revendication 5 ou 6, dans lequel le circuit de chaudière comprend au moins une vanne de régulation/isolement.

8. Système suivant la-revendication 5, 6 ou 7, dans lequel la conduite de retour à la chaudière dans le circuit de chaudière comprend une vanne de commande motorisée.

9. Système suivant l'une quelconque des revendications 4 à 6, dans lequel chacun desdits systèmes de chauffage comprend un dispositif de stockage thermique comprenant un réservoir de stockage d'eau chaude, un circuit fermé de chauffage d'espace et un circuit d'eau chaude domestique comprenant un enroulement d'échange de chaleur à travers lequel passe l'eau froide du réseau et qui reçoit de la chaleur de l'eau chaude dans le réservoir de stockage, l'eau dans le réservoir de stockage étant chauffée à partir du magasin tampon.

10. Système suivant la revendication 9, dans lequel chaque dispositif de stockage thermique met en oeuvre au moins un thermostat par lequel est détectée l'énergie calorifique emmagasinée dans le réservoir.

11. Système suivant la revendication 10, dans lequel le thermostat comporte une vanne de commande motorisée à travers laquelle de l'eau est envoyée du circuit principal de circulation à la réserve.

12. Système suivant l'une quelconque des revendications précédentes, comprenant un détecteur de température externe pour empêcher le système de s'arrêter automatiquement quand la température externe est au-dessous d'un minimum préréglé.

13. Système suivant l'une quelconque des revendications précédentes, comprenant un dispositif de commande de système électronique relié aux unités pour commander la sortie de la chaudière et/ou du magasin tampon suivant la demande desdites unités.

14. Système suivant la revendication 13, quand elle dépend de la revendication 8, dans lequel le dispositif de commande du système est relié à la chaudière et à la vanne motorisée dans le retour de chaudière du circuit de chaudière de manière que, quand il n'y a aucune demande à la chaudière, elle puisse être isolée en commandant la vanne et mise à l'arrêt en commandant sa mise en marche.

15. Système suivant la revendication 13 ou 14, quand elles dépendent de la revendication 5, 6 ou 7, dans lequel le dispositif de commande du système est relié à la pompe de chaudière et/ou au thermostat du circuit de chaudière de manière à commander la sortie de chaudière au moyen de la pompe de chaudière.

16. Système suivant la revendication 13, 14 ou 15, quand elles dépendent de la revendication 4, dans lequel le magasin tampon comporte un thermostat pour commander la pompe de circulation, ledit thermostat étant relié au dispositif de commande du système.

17. Système suivant la revendication 16, quand elle dépend de la revendication 2, dans lequel le dispositif de commande est relié à la vanne de by-pass pour la commander.

18. Système suivant la revendication 17, dans lequel le dispositif de commande du système commande la pompe de circulation du circuit principal de circulation afin de faire circuler de l'eau chaude autour du circuit principal de circulation et vers les unités si il y a de la demande, mais, dans le cas contraire, de faire ouvrir la vanne de by-pass pour permettre à l'eau du magasin tampon de circuler autour du circuit principal de circulation.

19. Système suivant l'une quelconque des revendications 13 à 18, quand elles dépendent de la revendication 10 et/ou de la revendication 11, dans lequel le dispositif de commande est relié au thermostat et/ou à la vanne motorisée de chaque unité de manière que la commande contrôle la température de chaque réservoir de stockage thermique et/ou fasse fonctionner la vanne motorisée suivant la demande.

20. Système suivant la revendication 19, dans lequel le dispositif de commande est réglé pour contrôler la température à laquelle fonctionne chaque thermostat d'unité.

21. Système suivant la revendication 20, dans lequel chaque thermostat d'unité est réalisé par un thermocouple.

22. Système suivant l'une quelconque des revendications 13 à 21, dans lequel le dispositif de commande du système peut être un calculateur programmé pour contrôler le fonctionnement du système.

23. Système suivant l'une quelconque des revendications 13 à 22, dans lequel le dispositif de commande du système contrôle l'alimentation en eau des unités de façon que de l'eau soit envoyée aux unités à la même température.

24. Système suivant l'une quelconque des revendications 13 à 24, dans lequel il y a une commande temporelle prévue pour arrêter le système pendant des périodes où il n'y a pas de demande.

25. Système suivant l'une quelconque des revendications précédentes, comportant un dispositif d'alarme qui fonctionne en cas de mauvais fonctionnement du système.
